# EUROPEAN PATENT SPECIFICATION

(11) **EP 3 199 077 B1**
(45) Date of publication and mention of the grant of the patent: **11.03.2020**
(21) Application number: 17153035.5
(22) Date of filing: 25.01.2017
(51) Int. Cl.: A47J 37/07

(54) **CHARCOAL BARBECUE**
HOLZKOHLEGRILL
BARBECUE AU CHARBON

(30) Priority: 26.01.2016 GB 201601466
(43) Date of publication of application: 02.08.2017
(73) Proprietor: O'Connell, Stewart, Killiney Dublin (IE); O'Connell, Joseph, Wicklow (IE)
(72) Inventor: O'Connell, Stewart, Killiney Dublin (IE); O'Connell, Joseph, Wicklow (IE)
(74) Representative: Hanna Moore + Curley

(56) References cited:
- CA-A1- 2 207 479
- DE-U1-202014 010 338
- GB-A- 2 020 167
- US-A1- 2004 211 406
- US-A1- 2009 308 373
- US-A1- 2011 283 990
- US-B2- 6 840 160

## Description

### Field

The present application relates to a barbecue for receiving charcoal or the like.

### Background

Charcoal barbecues generally comprise a bowl for receiving solid fuel, such as lump charcoal or charcoal briquettes or the like, and a cooking plate or grid placed above the fuel for grilling food. A charcoal tray may be placed in the bowl to support the charcoal. A barbecue may also comprise a hood to cover the bowl and may be mounted on legs.

In order to operate well a good air supply to the charcoal is needed. This is normally achieved by placing the charcoal on an open tray inside the bowl and having one or more vents on the bottom of the bowl to allow air to feed the combustion of the charcoal. The open tray defines a lower volume in the bowl where ash produced as a residue of the combustion of the charcoal may accumulate. The ash may also pass through the vents. This may be useful to evacuate the ash from the bowl but at the same time can be hazardous in the event that hot ash may fall from the barbecue. Indeed the safety standard for charcoal barbecues requires than no hot embers or ash can fall from the bowl onto the ground below and barbecues are specifically configured to address this potential problem.

For example, in some barbecues, an ash catcher may be provided under the bowl to collect the ash passing thorough the vents. After use of the barbecue, a user may sweep the bowl to evacuate the ash through the vents and gather the ash on the ash catcher. Where the bowl is supported by legs the ash catcher may be a plate attached to the legs. Another type of ash catcher may comprise a removable receptacle directly attached to the bowl for collecting a large amount of ash and providing an easy disposal of the ash.

However including an ash catcher under the bowl may not always be possible, for example in smaller portable barbecues, barbecues with folding legs or barbecues where the aesthetic design would be compromised by adding a plate to the leg assembly. In these cases, air can be supplied to the charcoal through vents on the side of the bowl and located above a level where the ash may collect within the bowl. This solution however affects the performance of the barbecue as only the charcoal closest to the vents of the bowl has enough air supply for adequate combustion and the charcoal in the centre portion of the bowl does not burn at optimum temperatures. Moreover in such an arrangement, as the ash is not evacuated by the vents, the user has to remove the ash from the top of the bowl.

Furthermore in some conditions the ash may accumulate on the vents and there is a risk of the ash covering the vents, thus reducing the air flow in the bowl which may impair the combustion process. This problem may be obviated by locating the vents higher than the ash in the bowl which has the consequence of exacerbating the problem highlighted above.

Therefore there continues to exist a need for improved charcoal barbecues. Relevant state of the art barbecues are for example: US 2009/308373 A1, US 6 840 160 B2, DE 20 2014 010338 U1, US 2011/283990 A1, US 2004/211406 A1, CA 2 207 479 A1 and GB 2 020 167 A.

### Summary

It is an objective of the present invention to provide a barbecue with an improved airflow system. The barbecue of the present invention is designed to operably provide an air supply from underneath the charcoal via vents while at the same time preventing hot embers or ash from falling through the vents.

For that purpose a barbecue in accordance with the present teaching comprises a bowl or receptacle dimensioned to receive therein a combustible fuel for use in the barbecue, the receptacle defines a first set of apertures opening to the outside of the receptacle, the first set of apertures forming vents to operably draw air into the receptacle to assist in a combustion of the combustible fuel, the receptacle further defining a second set of apertures through which ash resultant from combustion of the combustible fuel may pass and be collected in a lower part of the receptacle, the first and second apertures being offset such that the ash passing through the second set of apertures does not pass through the first set of apertures.

This configuration allows air to travel through both first and second apertures and reach the charcoal however any hot embers or ash that fall through the second apertures collect in the receptacle and do not fall through the first apertures.

A barbecue according to the invention has a simple yet effective design and provide several advantages. An effective ventilation arrangement is provided to ensure good combustion of the combustible fuel such as charcoal. As the ash is collected in the receptacle no separate ash catcher is needed. The receptacle provides a dual purpose in locating the combustible fuel and also provides an integrated ash catcher. The barbecue according to the invention may therefore be portable and/or have folding legs. It may also accommodate any aesthetic design of the receptacle.

Accordingly, a first embodiment of the application provides a barbecue for receiving a solid combustible fuel, the barbecue comprising a receptacle within which the solid combustible fuel is operably received, the receptacle comprising a first plate providing a first surface defining a first set of apertures and a second plate comprising a second, domed surface having a solid crown and defining a second set of apertures extending circumferentially about the crown, the first surface and the second domed surface defining therebetween a chamber to operably collect ash resultant from a combustion of the solid combustible fuel within the receptacle and having passed through the second set of apertures, the first set of apertures and the second set of apertures cooperating to define a ventilation path from outside the barbecue into the receptacle, the ventilation path passing through the chamber, the first set of apertures being offset relative to the second set of apertures in a direction lateral to a direction in which ash is collected within the chamber. It will be appreciated that the term "plate" is intended within the present application to be synonymous with the term "panel" as each define a member or element of the barbecue. It is implicit that these members are element are fabricated from a material that can withstand the temperatures that are usual within a charcoal barbecue environment.

The first plate may comprise an external wall of the barbecue.

The chamber may comprise a well for receiving the collected ash, the well being provided below the second set of apertures.

The well may comprise a lower surface which is located below the first sets of apertures in the direction in which ash is collected within the chamber.

The well may extend circumferentially about the first set of apertures.

The first plate and the second plate may define a double wall of the barbecue, the chamber being located within a volume defined by the double wall.

The second plate may extend to define an internal wall of the double wall of the barbecue.

The second plate may comprise an insert plate which is configured to be seated within the barbecue in a lower region of the receptacle.

The chamber may be formed by a seating of the insert plate within the receptacle.

The first set of apertures may be operably located below the solid crown.

Side walls of the insert plate may define side walls of the chamber.

The insert plate may be removable to provide access to ash collected within the chamber.

The apertures of the first set of apertures may be centrally located in a bottom wall of the receptacle and the apertures of the second set of apertures may be arranged to extend circumferentially around the first set of apertures.

The first set of apertures may be arranged to extend radially outwardly from a centre point of the bottom wall of the barbecue.

The first set of apertures may define a first pattern of apertures having a perimeter extending thereabout, the second set of apertures defining a second pattern extending outwardly, relative to the centre point, from the perimeter defined by the first pattern.

The first set of apertures may have a substantially circular geometrical shape and the second set of apertures may form a ring pattern surrounding the first set of apertures.

The chamber may comprise an enclosed space defined by the first and second plates.

These and other features will be better understood with reference to the following drawings which provide the person of skill with an understanding of the present teaching but in no way is intended to limit the present teaching.

### Brief Description Of The Drawings

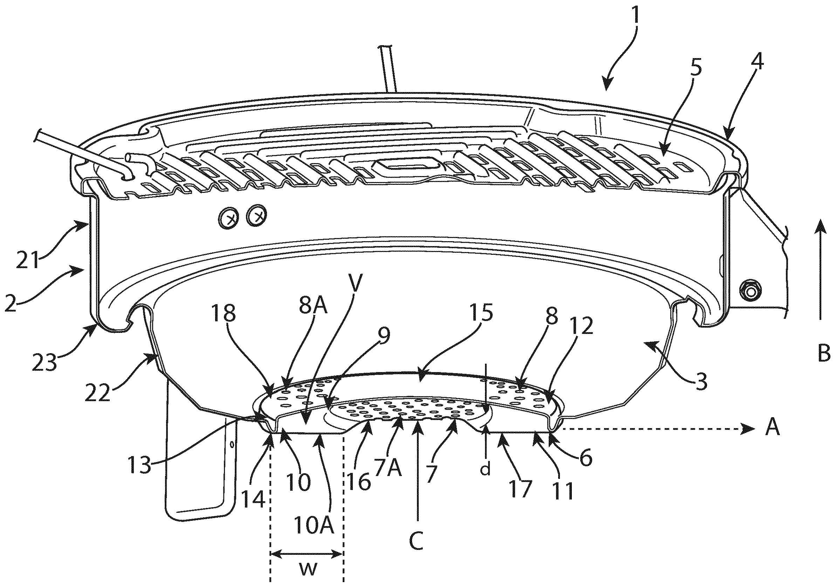

The present application will now be described with reference to the accompanying drawing in which the sole Figure shows a perspective sectional view of a barbecue in accordance with the present teaching.

### Detailed Description Of The Drawing

The sole Figure illustrates a charcoal barbecue 1 according to the invention. It will be understood that, although the below description mentions charcoal as a solid combustible fuel for the barbecue 1, various kind of solid combustible fuel such as lump charcoal, charcoal briquette, wood or other type of solid combustible fuel may also be used in such a barbecue 1.

The barbecue 1 comprises a bowl or receptacle 2 for operatively receiving charcoal and having a bottom part 3 and an upper part forming an opening 4 configured to receive a cooking plate 5 for grilling food on the barbecue 1. The charcoal may be arranged directly on the bottom part 3 in some embodiments. In other embodiments, a charcoal tray (not shown) may be placed in the receptacle 2 to receive the charcoal, for example the charcoal tray being supported by an internal circumferential lip 23 of the receptacle 2.

In use, the combustion of the charcoal in the receptacle 2 produces ash that accumulates in the bottom part 3 of the receptacle 2.

According to the invention, the barbecue 1 comprises a first surface 11 defining a first set of apertures 7 and a second surface 12 defining a second sets of apertures 8, the first set of apertures 7 and the second set of apertures 8 cooperating to define a ventilation path from outside the barbecue 1 into the receptacle 2. Each of the first set of apertures 7 and the second set of apertures 8 are offset relative to one another in a lateral direction A of the bottom wall 6 extending along a major axis of the barbecue 1, that is substantially parallel to the cooking plate 5 of the barbecue 1. The first surface 11 and the second surface 12 further define therebetween a chamber 9 to operably collect ash resultant from a combustion of the solid combustible fuel within the receptacle 2 and having passed through the second set of apertures 8. The ventilation path passes through the chamber 9.

With this arrangement of the barbecue 1 according to the invention, ash falling though the apertures of the second set of apertures 8 is collected into the chamber 9 but does not pass through the apertures of the first set of apertures 7.

As illustrated in the Figure, the barbecue 1 comprises a double-walled bottom wall 6 at the bottom part 3 of the receptacle 2, the bottom wall 6 defining the first and second sets of apertures 7, 8 defining the ventilation path into the receptacle 2. In the illustrated embodiment, the chamber 9 for collecting ash is defined in the bottom wall 6 between the first and second sets of apertures 7, 8.

The first surface 11 may define the wall 6 of the barbecue 1. The second surface may extend to define the wall 6 of the receptacle. The first surface 11 and the second surface 12 may define the double wall 6 of the barbecue 1, the chamber 9 being located within a volume defined by the double wall 6. Advantageously the chamber 9 may comprise an enclosed space defined by the first and second surfaces 11, 12.

As illustrated in the Figure, the first set of apertures 7 comprises a plurality of first apertures 7A and the second set of apertures 8 comprises a plurality of second apertures 8A. In particular the second apertures 8A of the second set of apertures 8 are dimensioned so as to allow ash or hot embers to pass therethrough while preventing the charcoal to fall into the chamber 9. It will be understood that a piece of charcoal may lay over a second aperture 8A without blocking air entering the barbecue 1.

A barbecue 1 according to the invention provides an air or ventilation path between the first set of apertures 7 and the second set of apertures 8 and also provides through the chamber 9, a trap for the ash. With this arrangement no vents are needed in the lateral wall of the receptacle 2. This arrangement allows air to travel through both first and second apertures 7, 8 which assists in combustion of the charcoal. However any hot embers or ash that fall through the second apertures 8 accumulate in the chamber 9 of the receptacle 2 and do not fall through the first apertures 7 and thus do not fall on the ground. Moreover the lateral offset of the first and second sets of apertures 7, 8 mitigates the possibility of covering the first set of apertures 7 with a resultant block of the air flow.

As illustrated a compact barbecue 1 may be achieved as both sets of apertures 7, 8 are formed in the bottom wall 6 of the barbecue 1.

As shown in the Figure the first and second sets of apertures 7, 8 are offset in a second direction B substantially perpendicular to the lateral direction A, i.e. the second direction B extends along a minor axis of the barbecue 1 that is substantially perpendicular to the cooking plate 5 of the barbecue 1. This allows for definition of a large ash collection chamber 9 between the sets of apertures 7, 8.

The chamber 9 may comprise a well 10 for receiving the collected ash. The well 10 may be arranged below the second sets of apertures 8, such that the ash passing through the second set of apertures 8 falls into and is collected in the well 10.

As illustrated in the Figure the well 10 may extend circumferentially about the first set of apertures 7, that is the well 10 is offset the first set of apertures 7 in the lateral direction A, so that the ash falling from the second set of apertures 8 does not pass through the first set of apertures 7.

The well 10 may comprise a lower surface 10A which is located below the first sets of apertures 7. The well 10 thus extends below the first set of apertures 7 with the first set of apertures 7 being raised above the lower surface 10A of the well 10 of a distance ***d***. Thus the well 10 of the chamber 9 defines a volume V to collect and accommodate the ash resultant from the combustion of the charcoal.

Preferably the well 10 is configured so that the volume V of the well 10 is sufficient to accommodate the ash resultant from the combustion of a load of charcoal without the ash overrunning the well 10. For example a load of charcoal may be defined as the quantity of charcoal needed to fill the receptacle 2. Therefore the volume of the well 10 may be configured to be large enough to accommodate the ash resultant from the combustion of a load of charcoal so that the user may cook on the barbecue 1 without having to empty the chamber 9, i.e. to remove the ash from the well 10 of the chamber 9, and may wait for the barbecue 1 to cool down to empty the chamber 9.

It is understood that the shape of the well 10 may vary, provided the volume of the well 10 is sufficient to accommodate the ash as described previously. In a preferred embodiment, the well 10 may be shallow and wide, as illustrated in the Figure, that is the distance ***d*** between the bottom 10A of the well 10 and the first set of apertures 7 is smaller than a width ***w*** of the well 10. In another embodiment, the well 10 may be deep and narrow, that is the distance ***d*** is larger than the width ***w*** of the well 10.

It will be understood that, the well 10 being located below the second sets of apertures 8, the width ***w*** of the well 10 may be adjusted according to the number and size of the apertures 8A of the second set of apertures 8 so that all apertures 8A are located above the well 10 thus preventing any ash from falling through an aperture 8A beside the well 10.

Advantageously the second surface 12 is defined by an insert plate which is configured to be seated within the barbecue 1 in a lower region or bottom part 3 of the receptacle 2. The chamber 9 may thus be formed by a seating of the insert plate within the receptacle 2. In the illustrated embodiment, the bottom wall 6 of the barbecue 1 comprises an external plate forming the first surface 11 and defining the first set of apertures 7 and an internal plate forming the second surface 12 and defining the second set of apertures 8.

Side walls of the insert plate may define side walls of the chamber 9. For example the external plate 11 may have a raised portion 16 in which the first set of apertures 7 is formed and a recess portion 17 forming the well 10. Furthermore the external plate 11 may be configured to receive the internal plate 12 so as to form with the internal plate 11 the chamber 9. For example as shown in the Figure, the internal plate 12 may be bent at a periphery thereof to form a rim 13 that may engage a recess edge 14 of the recess portion 17 at a periphery of the external plate 11.

The insert plate may be removable to provide access to ash collected within the chamber 9. Specifically the internal plate 12 may be a removable insert of the bottom wall 6. This allows for an easy cleaning of the barbecue after use as the internal plate 12 may be lifted and removed to enable access to the chamber 9 via the opening 4 of the receptacle 2. The collected ash may then be removed for example swept through the first set of apertures 7 or otherwise evacuated via the opening 4.

In an embodiment, the external plate 11 of the bottom wall 6 may be integrally formed with the receptacle 2 of the barbecue 1. In another embodiment, the external plate 11 of the bottom wall 6 may be an openable trap under the receptacle 2 of the barbecue 1 to provide access to the chamber 9 via the bottom part 3 of the receptacle 2 and evacuate the collected ash via the bottom part 3.

In an embodiment, the plurality of first apertures 7A may be offset from the plurality of second apertures 8A, i.e. all apertures of the plurality of first apertures 7A are grouped together and all apertures of the plurality of second apertures 8A are grouped together separately from the plurality of first apertures 7A. In another embodiment the plurality of first and second apertures 7A, 8A may be arranged differently (not shown). For example the first apertures 7A may be grouped into two or more groups of first apertures 7A that are offset from one or more groups of second apertures 8A. The chamber 9 may thereby be divided in two or more parts.

It will be understood that the distribution of the first, second apertures 7A, 8A in the bottom wall 6 may vary depending on the size and shape of the barbecue 1.

In the illustrated preferred embodiment the apertures 7A of the first set of apertures 7 are centrally located in the bottom wall 6 of the barbecue 2 and the apertures 8A of the second set of apertures 8 are arranged to extend circumferentially around the first set of apertures 7. Hence the apertures 8A of the second set of apertures 8 are located at a periphery of the apertures 7A of the first set of apertures 7. Preferably the raised portion 16 of the external plate 11 is centrally formed in the bottom wall 6 and the well 10 is form around the first set of apertures 7.

As illustrated the first set of apertures 7 may be arranged to extend radially outwardly from a centre point of the bottom wall 6 of the barbecue 1. The first set of apertures 7 may define a first pattern of apertures having a perimeter extending thereabout, the second set of apertures 8 defining a second pattern extending outwardly, relative to the centre point, from the perimeter defined by the first pattern. In an embodiment the first set of apertures 7 may have a substantially circular geometrical shape and the second set of apertures 8 may form a ring pattern surrounding the first set of apertures 7.

The second surface 12 may comprise a domed surface having a solid crown 15, the second set of apertures 8 extending circumferentially about the crown 15. The first set of apertures 7 may operably be located below the solid crown 15.

The second set of apertures 8 may for example be located around the crown 15 along an outer edge 18 of the internal plate 12. With this arrangement of the internal plate 12 the second set of apertures 8 is therefore located below the crown 15 in the second direction B.

Thanks to the dome-shape of the internal plate 12 ash may be directed downwardly towards the second set of apertures 8 and pass therethrough in the chamber 9. The dome-shape of the internal plate 12 may allow in turn to accommodate the raised portion 16 of the external plate 11.

In will be understood that the first set of apertures 7 may either serve as a fixed or adjustable vents. In an adjustable embodiment, an additional plate (not shown) may be mounted to the bottom wall 6 of the barbecue 1, for example to the external plate 11 of the bottom wall 6, the additional plate defining holes which number and relative positions correspond to the number and relative positions of the first set of apertures 7. The additional plate may be fixed to the barbecue 1 in such a way that a rotation or slide of the additional plate effects a corresponding opening or closing of the first set of apertures 7.

In the illustrated embodiment, the receptacle 2 of the barbecue 1 has a substantially circular cross section and the apertures 8A of the second set of apertures 8 form a ring pattern surrounding the first set of apertures 7. The bottom wall 6 may have a substantially circular shape. The apertures 7A of the first set of apertures 7 may be arranged to cover a disk-shape on the bottom wall 6. The well 10 has a substantially ring shape surrounding the raised portion 16, that may be substantially circular, and the first set of apertures 7.

The arrangement of the first and second sets of apertures 7, 8 of the barbecue 1 according to the invention provides a compact arrangement which is well suited for a foldable barbecue. As shown here the receptacle 2 may comprise first and second receptacle parts 21, 22 arranged to form a foldable receptacle 2. In the present embodiment, the second receptacle part 22 is sized to fit into the first receptacle part 21 in a foldable position of the barbecue. The second receptacle part 22 may be arranged to slide along the first receptacle part 21 in the direction B as previously defined, so as to obtain an extended position of the barbecue 1, as illustrated in the Figure. In the extended position of the barbecue 1, the second receptacle part 22 may be supported by the lip 23 of the first receptacle part 21.

Hence in use of the barbecue 1, the combustion of the charcoal in the receptacle 2 produces ash that first deposits on the bottom 3 of the receptacle 2 and more precisely on the internal plate 12 of the bottom 3. The internal plate 12 may serve a dual function of a charcoal grid that supports the charcoal, in particular a fire of burning charcoal, and of an ash sieve that let ash pass through the second set of apertures 8. In other embodiments where the charcoal is supported by an additional charcoal tray, the internal plate 12 is only serving as an ash sieve allowing ash to pass through the second set of apertures 8.

Moreover, the dome shape of the internal plate 12 directs the ash downwardly from the crown 15 towards the apertures 8A located around the crown 15. Advantageously the second set of apertures 8 are located around the crown 15 so that the ash resulting from the charcoal combustion are directed downwardly in all directions and into the second set of apertures 8. This effects a rapid evacuation of the ash into the chamber 9.

In the same time, the configuration of the barbecue 1 according to the invention allows air to travel first through the first set of apertures 7 into the chamber 9, above any collected ash, then through the second set of apertures to reach the charcoal and feed the combustion of the charcoal.

It will be understood that the described and illustrated radial arrangement of the apertures with the first set of apertures 7 proximal to a centre C of the bottom wall 6, that is aligned with the crown 15 in the second direction B, and the second set of apertures 8 proximal to a distal region of the bottom wall 6, enables the ash to be evacuated towards the periphery of the receptacle while an air flow enters circumferentially the receptacle 2 to surround the fire and provide an adequate air supply to the combustion.

In another embodiment not shown, on the contrary, the first set of apertures may be located at a periphery of the bottom wall while the second set of apertures may be located proximal to a centre C of the bottom wall. In that case it will be understood that the internal plate may have a concave shape instead of a dome shape in order to direct ash downwardly towards the centrally located second set of apertures and into the chamber. The well of the chamber in this embodiment may be also centrally located below the second set of apertures to collect ash falling through the second set of apertures. This arrangement therefore allows, similarly to the described embodiment, an air flow to circulate through the first set of apertures into the chamber and through the second set of apertures into the centre of the receptacle to feed the combustion in the centre of the fire, while the ash resultant from the combustion of the charcoal in the receptacle may pass through the second set of apertures to be collected in the chamber.

## Claims

1. A barbecue (1) for receiving a solid combustible fuel, the barbecue comprising a receptacle (2) within which the solid combustible fuel is operably received, the receptacle (2) comprising a first plate providing a first surface (11) defining a first set of apertures (7) and a second plate comprising a second, domed surface (12) having a solid crown (15) and defining a second set of apertures (8) extending circumferentially about the crown (15), the first surface (11) and the second domed surface (12) defining therebetween a chamber (9) to operably collect ash resultant from a combustion of the solid combustible fuel within the receptacle (2) and having passed through the second set of apertures (8), the first set of apertures (7) and the second set of apertures (8) cooperating to define a ventilation path from outside the barbecue (1) into the receptacle (2), the ventilation path passing through the chamber (9), the first set of apertures (7) being offset relative to the second set of apertures (8) in a direction (A) lateral to a direction (B) in which ash is collected within the chamber (9).

2. The barbecue of claim 1, wherein the first plate comprises an external wall (6) of the barbecue (1).

3. The barbecue of claim 1 or 2, wherein the chamber (9) comprises a well (10) for receiving the collected ash, the well (10) being provided below the second set of apertures (8).

4. The barbecue of claim 3 wherein the well (9) comprises a lower surface which is located below the first set of apertures (7) in the direction (B) in which ash is collected within the chamber; optionally the well (10) extends circumferentially about the first set of apertures (7).

5. The barbecue of any one of the preceding claims, wherein the first plate and the second plate define a double wall of the barbecue (1), the chamber (9) being located within a volume defined by the double wall.

6. The barbecue of claim 5 wherein the second plate extends to define an internal wall of the double wall of the barbecue (1).

7. The barbecue of any preceding claim wherein the second plate comprises an insert plate which is configured to be seated within the barbecue (1) in a lower region of the receptacle (2).

8. The barbecue of claim 7 wherein the chamber (9) is formed by a seating of the insert plate within the receptacle (2)

9. The barbecue of claim 1 wherein the first set of apertures (7) are operably located below the solid crown (15).

10. The barbecue of claim 9 wherein side walls of the insert plate define side walls of the chamber (9).

11. The barbecue of any one of claims 7 to 10 wherein the insert plate is removable to provide access to ash collected within the chamber (9).

12. The barbecue of any preceding claim wherein the apertures of the first set of apertures (7) are centrally located in a bottom wall of the receptacle (2) and the apertures of the second set of apertures (8) are arranged to extend circumferentially around the first set of apertures (7).

13. The barbecue of claim 12 wherein the first set of apertures (7) is arranged to extend radially outwardly from a centre point of the bottom wall (6) of the barbecue (1).

14. The barbecue of claim 13 wherein the first set of apertures (7) define a first pattern of apertures having a perimeter extending thereabout, the second set of apertures (8) defining a second pattern extending outwardly, relative to the centre point, from the perimeter defined by the first pattern; optionally the first set of apertures (7) has a substantially circular geometrical shape and the second set of apertures (8) forms a ring pattern surrounding the first set of apertures (7).

15. The barbecue of any preceding claim wherein the chamber (9) comprises an enclosed space defined by the first and second plates.

## Patentansprüche

1. Grill (1) zum Aufnehmen eines festen Brennstoffs, wobei der Grill eine Aufnahme (2) umfasst, in welcher der feste Brennstoff betriebsfähig aufgenommen wird, wobei die Aufnahme (2) eine erste Platte, die eine erste Oberfläche (11) bereitstellt, die einen ersten Satz von Öffnungen (7) definiert, und eine zweite Platte, die eine zweite, gewölbte Oberfläche (12) umfasst, die einen festen Kranz (15) aufweist und einen zweiten Satz von Öffnungen (8) definiert, die sich umfangsmäßig um den Kranz (15) herum erstrecken, umfasst, wobei die erste Oberfläche (11) und die zweite gewölbte Oberfläche (12) dazwischen eine Kammer (9) definieren, um betriebsfähig Asche zu sammeln, die sich aus einer Verbrennung des festen Brennstoffs im Innern der Aufnahme (2) ergibt und durch den zweiten Satz von Öffnungen (8) gegangen ist, wobei der erste Satz von Öffnungen (7) und der zweite Satz von Öffnungen (8) zusammenwirken, um einen Belüftungsweg von außerhalb des Grills (1) in die Aufnahme (2) hinein zu definieren, wobei der Belüftungsweg durch die Kammer (9) hindurch geht, wobei der erste Satz von Öffnungen (7) im Verhältnis zu dem zweiten Satz von Öffnungen (8) in einer Richtung (A) versetzt ist, die zu einer Richtung (B) seitlich ist, in der Asche im Innern der Kammer (9) gesammelt wird.

2. Grill nach Anspruch 1, wobei die erste Platte eine externe Wand (6) des Grills (1) umfasst.

3. Grill nach Anspruch 1 oder 2, wobei die Kammer (9) einen Schacht (10) umfasst, um die gesammelte Asche aufzunehmen, wobei der Schacht (10) unterhalb des zweiten Satzes von Öffnungen (8) bereitgestellt wird.

4. Grill nach Anspruch 3, wobei der Schacht (9) eine untere Oberfläche umfasst, die sich unterhalb des ersten Satzes von Öffnungen (7) in der Richtung (B) befindet, in der die Asche im Innern der Kammer gesammelt wird; wobei sich der Schacht (10) wahlweise umfangsmäßig um den ersten Satz von Öffnungen (7) herum erstreckt.

5. Grill nach einem der vorhergehenden Ansprüche, wobei die erste Platte und die zweite Platte eine doppelte Wand des Grills (1) definieren, wobei sich die Kammer (9) im Innern eines Volumens befindet, das durch die doppelte Wand definiert ist.

6. Grill nach Anspruch 5, wobei sich die zweite Platte erstreckt, um eine interne Wand der doppelten Wand des Grills (1) zu definieren.

7. Grill nach einem der vorhergehenden Ansprüche, wobei die zweite Platte eine Einsetzplatte umfasst, die konfiguriert ist, um in den Grill (1) in eine untere Region der Aufnahme (2) gesetzt zu werden.

8. Grill nach Anspruch 7, wobei die Kammer (9) durch eine Sitzfläche der Einsetzplatte im Innern der Aufnahme (2) gebildet ist.

9. Grill nach Anspruch 1, wobei sich der erste Satz von Öffnungen (7) betriebsfähig unterhalb des festen Kranzes (15) befindet.

10. Grill nach Anspruch 9, wobei Seitenwände der Einsetzplatte Seitenwände der Kammer (9) definieren.

11. Grill nach einem der Ansprüche 7 bis 10, wobei die Einsetzplatte abnehmbar ist, um Zugriff auf Asche zu geben, die sich im Innern der Kammer (9) angesammelt hat.

12. Grill nach einem der vorhergehenden Ansprüche, wobei sich die Öffnungen des ersten Satzes von Öffnungen (7) in einer unteren Wand der Aufnahme (2) mittig befinden und die Öffnungen des zweiten Satzes von Öffnungen (8) eingerichtet sind, um sich umfangsmäßig um den ersten Satz von Öffnungen (7) herum zu erstrecken.

13. Grill nach Anspruch 12, wobei der erste Satz von Öffnungen (7) eingerichtet ist, um sich von einem Mittelpunkt der unteren Wand (6) des Grills aus radial nach außen zu erstrecken.

14. Grill nach Anspruch 13, wobei der erste Satz von Öffnungen (7) ein erstes Muster von Öffnungen definiert, die einen Perimeter aufweisen, der sich um diesen herum erstreckt, wobei der zweite Satz von Öffnungen (8) ein zweites Muster definiert, das sich im Verhältnis zu dem Mittelpunkt von dem Perimeter aus, der durch das erste Muster definiert ist, nach außen erstreckt; wobei der erste Satz von Öffnungen (7) wahlweise eine im Wesentlichen kreisförmige geometrische Form aufweist und der zweite Satz von Öffnungen (8) ein Ringmuster bildet, das den ersten Satz von Öffnungen (7) umgibt.

15. Grill nach einem der vorhergehenden Ansprüche, wobei die Kammer (9) einen geschlossenen Raum umfasst, der durch die ersten und zweiten Platten definiert ist.

## Revendications

1. Barbecue (1) pour recevoir un combustible solide, le barbecue comprenant un réceptacle (2) à l'intérieur duquel le combustible solide est reçu de manière opérationnelle, le réceptacle (2) comprenant une première plaque fournissant une première surface (11) définissant un premier ensemble d'ouvertures (7) et une seconde plaque comprenant une seconde surface en forme de dôme (12) ayant une couronne pleine (15) et définissant un second ensemble d'ouvertures (8) s'étendant circonférentiellement autour de la couronne (15), la première surface (11) et la seconde surface en forme de dôme (12) définissant entre elles une chambre (9) pour collecter de manière opérationnelle les cendres résultant d'une combustion du combustible solide à l'intérieur du réceptacle (2) et ayant traversé le second ensemble d'ouvertures (8), le premier ensemble d'ouvertures (7) et le second ensemble d'ouvertures (8) coopérant pour définir un chemin de ventilation depuis l'extérieur du barbecue (1) dans le réceptacle (2), le chemin de ventilation passant à travers la chambre (9), le premier ensemble d'ouvertures (7) étant décalé par rapport au second ensemble d'ouvertures (8) dans une direction (A) latérale à une direction (B) dans laquelle les cendres sont collectées à l'intérieur de la chambre (9).

2. Barbecue selon la revendication 1, dans lequel la première plaque comprend une paroi externe (6) du barbecue (1).

3. Barbecue selon la revendication 1 ou 2, dans lequel la chambre (9) comprend un puits (10) pour recevoir les cendres collectées, le puits (10) étant prévu sous le second ensemble d'ouvertures (8).

4. Barbecue selon la revendication 3, dans lequel le puits (9) comprend une surface inférieure qui est située sous le premier ensemble d'ouvertures (7) dans la direction (B) dans laquelle les cendres sont collectées à l'intérieur de la chambre ; éventuellement, le puits (10) s'étend circonférentiellement autour du premier ensemble d'ouvertures (7).

5. Barbecue selon l'une quelconque des revendications précédentes, dans lequel la première plaque et la seconde plaque définissent une double paroi du barbecue (1), la chambre (9) étant située dans un volume défini par la double paroi.

6. Barbecue selon la revendication 5, dans lequel la seconde plaque s'étend pour définir une paroi interne de la double paroi du barbecue (1).

7. Barbecue selon une quelconque revendication précédente, dans lequel la seconde plaque comprend une plaque d'insertion qui est configurée pour être logée à l'intérieur du barbecue (1) dans une région inférieure du réceptacle (2).

8. Barbecue selon la revendication 7, dans lequel la chambre (9) est formée par le logement de la plaque d'insertion à l'intérieur du réceptacle (2).

9. Barbecue selon la revendication 1, dans lequel le premier ensemble d'ouvertures (7) est situé de manière opérationnelle sous la couronne pleine (15).

10. Barbecue selon la revendication 9, dans lequel les parois latérales de la plaque d'insertion définissent les parois latérales de la chambre (9).

11. Barbecue selon l'une quelconque des revendications 7 à 10, dans lequel la plaque d'insertion est amovible pour permettre l'accès aux cendres collectées à l'intérieur de la chambre (9).

12. Barbecue selon une quelconque revendication précédente, dans lequel les ouvertures du premier ensemble d'ouvertures (7) sont situées au centre dans une paroi inférieure du réceptacle (2) et les ouvertures du second ensemble d'ouvertures (8) sont agencées pour s'étendre circonférentiellement autour du premier ensemble d'ouvertures (7).

13. Barbecue selon la revendication 12, dans lequel le premier ensemble d'ouvertures (7) est agencé pour s'étendre radialement vers l'extérieur à partir d'un point central de la paroi inférieure (6) du barbecue (1).

14. Barbecue selon la revendication 13, dans lequel le premier ensemble d'ouvertures (7) définit un premier motif d'ouvertures ayant un périmètre s'étendant autour de celui-ci, le second ensemble d'ouvertures (8) définissant un second motif s'étendant vers l'extérieur, par rapport au point central, à partir du périmètre défini par le premier motif ; éventuellement, le premier ensemble d'ouvertures (7) a une forme géométrique sensiblement circulaire et le second ensemble d'ouvertures (8) forme un motif annulaire entourant le premier ensemble d'ouvertures (7).

15. Barbecue selon une quelconque revendication précédente, dans lequel la chambre (9) comprend un espace clos défini par les première et seconde plaques.
